# EUROPÄISCHE PATENTSCHRIFT

(11) **EP 0 370 334 B1**
(45) Veröffentlichungstag und Bekanntmachung des Hinweises auf die Patenterteilung: **08.03.1995**
(21) Anmeldenummer: 89120856.3
(22) Anmeldetag: 10.11.1989
(51) Int. Cl.: F16B 12/04

(54) **Stoss- oder Eckverbindung von Rahmenteilen**
Butt or corner joint of frame parts
Liaison bout à bout ou liaison d'angle pour pièces de cadre

(30) Priorität: 24.11.1988 DE 8814624 U
(43) Veröffentlichungstag der Anmeldung: 30.05.1990
(73) Patentinhaber: HOFFMANN GMBH, D-76646 Bruchsal (DE)
(72) Erfinder: Hoffmann, Thomas, Dipl.-Ing. (FH), D-76646 Bruchsal (DE)
(74) Vertreter: Geitz, Heinrich, Dr.-Ing.

(56) Entgegenhaltungen:
- FR-A- 1 338 108
- FR-A- 2 425 010
- FR-A- 2 616 183
- NL-C- 59 978

## Beschreibung

Die Erfindung bezieht sich auf eine Stoß- oder Eckverbindung von in Kontaktflächen aneinandergefügten, insbesondere aus Massivholz bestehenden Rahmenteilen, mit wenigstens einem in Bezug auf eine Mittelachse symmetrisch ausgebildeten und mit zunehmendem Abstand von dieser Mittelachse größer werdende Querschnitte aufweisenden Verbindungselement, das unter Überbrückung der Kontaktebene zwischen den Rahmenteilen in zu den Kontaktflächen offene und den untereinander gleichen Querschnitten der sich beidseitig der Mittelachse erstreckenden Abschnitte des Verbindungselements angepaßte Nuten eingreift, die sich längs der Kontaktflächen hineinerstrecken.

Aus der FR-A-1 338 108 ist bereits eine gattungsgemäße Eckverbindung mit einem Verbindungselement bekannt, das in sich von den Kontaktflächen aneinandergefügter Rahmenteile aus in letztere hineinerstreckenden Nuten aufgenommen und in Bezug auf eine in die Kontaktebene der aneinandergefügten Rahmenteile fallende Mittelachse symmetrisch ausgebildet ist sowie im Abstand von dieser Mittelachse hammerkopfartig ausgebildete Abschnitte aufweist, die in entsprechend ausgestaltete Erweiterungen der Aufnahmenuten ein- und letztere begrenzende Schultern formschlüssig hintergreifen.

Neben den Verbindungselementen mit beidseitig im Abstand von der erwähnten Mittelebene angeordneten hammerkopfartigen Abschnitten sind in der vorgenannten Schrift auch Verbindungselemente mit anderen Querschnitten vorgeschlagen worden, so mit wulstartigen Verdickungen an Stelle der hammerkopfartigen Abschnitte, aber auch als Federteile ausgebildete Verbindungselemente mit sich von der erwähnten Mittelebene divergierend forterstreckenden Flanschteilen.

Ausgehend von diesem Stande der Technik besteht die der Erfindung zugrundeliegende Aufgabe in der Schaffung einer verbesserten Stoß- oder Eckverbindung, die insbesondere für Bilderrahmen oder für Rahmen ähnlich dekorativer Art geeignet und bestimmt ist.

Gelöst ist diese Aufgabe durch eine Stoß- oder Eckverbindung mit den Merkmalen des Patentanspruchs.

Bei einer derartigen Ausbildung der Stoß- oder Eckverbindung müssen die miteinander zu verbindenden Rahmenteile lagerichtig aneinandergefügt und dann die Verbindungselemente in die sich beidseitig der Kontaktflächen erstreckenden Nuten von einer Seitenkante der Rahmenteile aus eingepreßt werden. Angesichts der Ausbildung der Nuten in der Art von im Abstand von den jeweils anderen Seitenkanten der Rahmenteile endenden Sacklöchern sind die eingepreßten doppelkeilförmigen Verbindungselemente und die letztere aufnehmenden Nuten nur von einer Seite des Rahmens aus sichtbar, wobei es sich im Falle dekorativen Zwecken dienender Rahmen naturgemäß um die Rahmenrückseite handelt. Die Stoß- oder Eckverbindung nach der Erfindung ermöglicht mithin den Aufbau von Bilderrahmen oder Rahmen ähnlicher Art mit einer durch die Verbindungsmittel und deren Aufnahmenuten nicht gestörten Sichtseite.

Angesichts der Ausbildung der Verbindungselemente als - im Querschnitt gesehen - schwalbenschwanzförmige Doppelkeile ist gewährleistet, daß beim Eintreiben in die sich von einer Seitenkante der Rahmenteile aus in letztere hineinerstreckenden Nuten eine formschlüssig feste Verbindung der Rahmenteile erreicht wird und die Kontaktflächen der Rahmenteile in einer Kontaktebene fest aufeinandergepreßt werden.

Als vorteilhaft hat sich auch erwiesen, wenn die der Querschnittsform der Verbindungselemente angepaßten Nuten als sich jeweils symmetrisch zu einer Symmetrieebene mit zunehmender Tiefe schwalbenschwanzförmig erweiternde Ausnehmungen ausgebildet sind und wenn diese Symmetrieebenen sich rechtwinklig zu den Kontaktflächen der Rahmenteile erstrecken.

Anhand der beigefügten Zeichnung sollen zwei Ausführungsformen einer erfindungsgemäßen Eckverbindung erläutert werden. In schematischen Ansichten zeigen:
- Fig. 1: in perspektivischen Darstellungen zwei Rahmenteile mit von jeweils einer Seitenkante aus eingefrästen, einerseits zu einer Stirnseite und andererseits zu einer angrenzenden Seitenkante offenen Nuten und eine in letztere einpreßbare Feder,
- Fig. 2: ebenfalls in perspektivischer Darstellung die beiden rechtwinklig aneinandergefügten Rahmenteile, wobei als Kontaktflächen die Stirnkante des einen Rahmenteils mit der eingefrästen Nute an einer Flachseite des anderen Rahmenteils anliegt und die Feder teilweise in die miteinander fluchtenden Nuten der beiden Rahmenteile eingepreßt ist,
- Fig. 3: eine Draufsicht auf die Eckverbindung nach Fig. 2,
- Fig. 4: eine dem Schnittverlauf IV-IV in Fig. 3 entsprechende Schnittansicht,
- Fig. 5: eine perspektivische Darstellung einer Eckverbindung mit auf Gehrung geschnittenen Rahmenteilen und mit einer teilweise in die sich von gleichen Seitenkanten aus in die Rahmenteile hineinerstreckenden Nuten eingepreßter Feder und
- Fig. 6: in einer stirnseitigen Ansicht einer auf Gehrung geschnittenen Kontaktfläche eines profilierten Rahmenteils die Anordnung zwei parallel zueinander verlaufender Aufnahmenuten für entsprechend angepaßte Federn als Verbindungselemente.

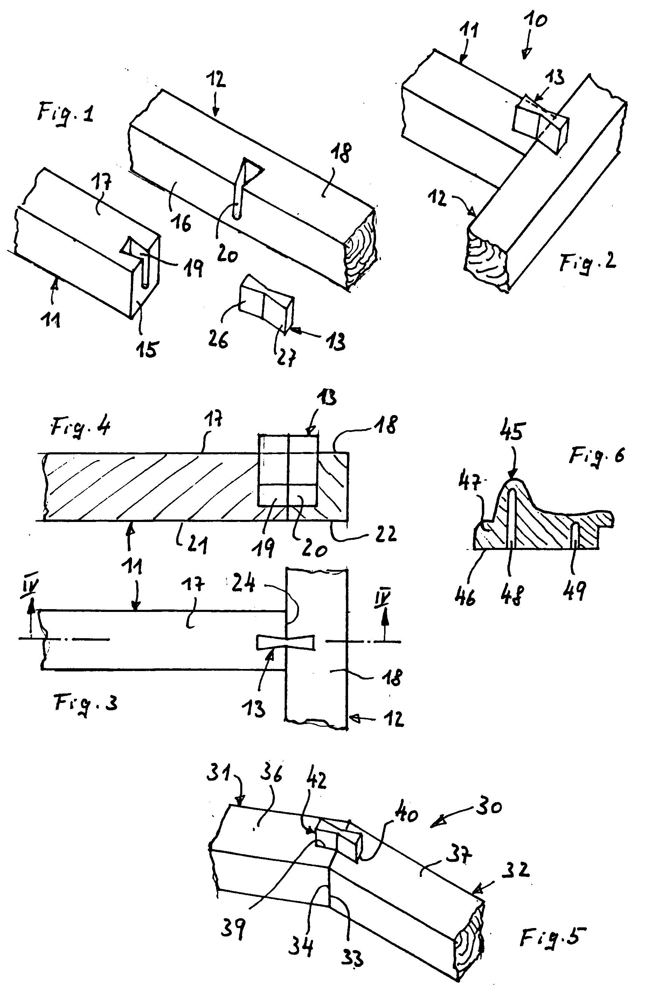

Bei der in Fig. 2 veranschaulichten Eckverbindung 10 sind die für sich allein in Fig. 1 veranschaulichten Rahmenteile 11, 12 rechtwinklig aneinandergefügt und mittels der aus Fig. 1 ersichtlichen Feder 13 formschlüssig miteinander verbunden. Dabei stößt das Rahmenteil mit seiner Stirnseite als Kontaktfläche 15 an eine Längsseite des anderen Rahmenteils an und ausgehend von den in Fig. 2 nach oben weisenden Seitenkanten 17, 18 der Rahmenteile 11, 12 sind in diese sacklochartig ausgebildete Nuten 19, 20 eingefräst, die zu den aneinanderliegenden Kontaktflächen hin offen sind und der Aufnahme der in Fig. 2 erst teilweise eingepreßten Feder 13 als Verbindungsmittel dienen. Bei der fertigen Eckverbindung 10 ist die Feder 13 flächenbündig mit den Seitenkanten 17, 18 Rahmenteile 11, 12 eingepreßt.

Die jeweils von einer Seitenfläche aus in die Rahmenteile eingebrachten Nuten 19, 20, die im Abstand von der gegenüberliegenden Seitenfläche 21, 22 der jeweiligen Rahmenteile 11, 12 enden, erweitern sich von den Kontaktflächen aus mit zunehmender Tiefe, so daß die Nuten in Bezug auf die Kontaktflächen hinterschnitten sind. Jeweils parallel zur Kontaktfläche gesehen (in einer Draufsicht auf die Rahmenteile) haben die Nuten 19, 20 trapezförmige Querschnitte, wobei die kleinere Grundlinie von der in die Kontaktfläche 24 fallenden Offenseite gebildet wird, während die größere Trapez-Grundseite sich im Abstand von der jeweiligen Kontaktfläche befindet.

Analog zu der Gestaltung der von den jeweils einen Seitenflächen 17, 18 der Rahmenteile 11, 12 eingebrachten und zu den Kontaktflächen hin offenen Nuten 19, 20 ist die als Verbindungsmittel dienende Feder 13 gestaltet, die symmetrisch zu einer sich bei bestimmungsgemäßer Verwendung in der Kontaktebene 24 zwischen den aneinandergefügten Rahmenteilen erstreckenden Mittelachse ausgebildet ist und - im Querschnitt gesehen - aus zwei trapezförmigen Teilen 26, 27 besteht, die im Bereich der Mittelachse mit ihren kleineren Grundlinien zusammenstoßen.

Wenn eine Eckverbindung gemäß Fig. 2 hergestellt werden soll, muß das Rahmenteil 11 mit seiner stirnseitigen Kontaktfläche 15 bei fluchtenden Aufnahmenuten 19, 20 für die Feder 13 an die Seitenfläche 16 des Rahmenteils 12 lagerichtig angesetzt und dann die Feder 13 in der aus Fig. 2 ersichtlichen Weise von den Seitenflächen 17, 18 aus, von der die Nuten 19, 20 in die Rahmenteile eingebracht worden sind, in die Nuten eingepreßt werden. Fig. 2 zeigt in Übereinstimmung mit den Fig. 3 und 4 die Eckverbindung 10 mit teilweise in die zu den Kontaktflächen hin offenen Aufnahmenuten 19, 20 eingepreßte Feder 13.

Es ist ersichtlich, daß angesichts der Hinterschneidungen der sich von den Kontaktflächen aus in die Rahmenteile 11, 12 hineinerstreckenden Aufnahmenuten 19, 20 und angesichts der entsprechend keilförmigen Gestaltung der Feder 13 mit zwei symmetrisch zu einer Mittelachse angeordneten trapezförmigen Teilflächen 26, 27 eine in die Nuten eingepreßte Feder eine formschlüssig feste Verbindung zwischen den aneinandergefügten Rahmenteilen vermittelt und diese gegeneinander verspannt. Vor dem Einpressen der Feder in die Aufnahmenut im Bereich der Kontaktflächen aufgebrachter Leim kann unter der durch die eingepreßte Feder vermittelten Zusammendrückung der Kontaktflächen aushärten.

Während in Verbindung mit den Fig. 1 bis 4 der stirnseitige Anschluß eines Rahmenteils an eine Seitenfläche eines anderen Rahmenteils erläutert wurde, zeigt Fig. 5 eine Eckverbindung 30 von Rahmenteilen 31, 32 mit auf Gehrung geschnittenen Kontaktflächen 33, 34. Die in gleicher Weise wie bei der ersten Ausführungsform von gleichen Seitenflächen 36, 37 aus in die Rahmenteile eingebrachten Aufnahmenuten 39, 40, die zu den Kontaktflächen hin offen sind und nicht bis zu den gegenüberliegenden Seitenflächen der Rahmenteile reichen, sind wiederum in Bezug auf die Kontaktflächen mit Hinterschneidungen versehen und bei der teilweise eingepreßten Feder 42 handelt es sich um ein Doppelkeilprofil mit - im Querschnitt gesehen - im Bereich ihrer kurzen Seiten aneinanderstoßenden Trapezflächen.

Bei den vorstehend behandelten Ausführungsformen nach den Fig. 2 und 5 sind die Eckverbindungen 10, 30 in Überkopflage dargestellt, also in der Weise, daß diejenigen Seitenflächen 17, 18 und 36, 37 der Rahmenteile 11, 12 und 31, 32, von denen aus die Aufnahmenuten für die Federn 13, 42 eingebracht sind, nach oben weisen. Bei diesen Seitenflächen handelt es sich indessen um die Unterseiten der Rahmenteile, während auf den gegenüberliegenden Oberseiten die bei den fertigen Eckverbindungen vollständig eingepreßten Federn angesichts der sacklochartigen Ausbildung der Aufnahmenuten nicht sichtbar sind.

Bei dem in Fig. 6 veranschaulichten Rahmenteil 45 handelt es sich beispielsweise um ein profiliertes Rahmenteil zur Herstellung von Bilderrahmen. Von der Unterseite 46 aus sind in dieses Rahmenteil zu der in schraffierten Linien angedeuteten Kontaktfläche 47, die auf Gehrung geschnitten ist, hin offene Nuten 48, 49 im Abstand voneinander eingebracht, die ebenfalls von der Kontaktfläche ausgehende Hinterschneidungen aufweisen. Beim Anfügen eines anderen - nicht gezeigten - Rahmenteils mit seiner gleichfalls auf Gehrung geschnittenen Kontaktfläche werden in gleicher Weise, wie dies oben in Verbindung mit den beiden behandelten Ausführungsbeispielen erläutert worden ist, in die dann miteinander fluchtenden Nuten der aneinandergefügten Rahmenteile entsprechend gestaltete Federn eingepreßt, die eine formschlüssig feste Verbindung der mit ihren Kontaktflächen aneinandergefügten und gegebenenfalls verleimten Rahmenteile vermitteln.

## Patentansprüche

1. Stoß- oder Eckverbindung von in Kontaktflächen aneinandergefügten, insbesondere aus Massivholz bestehenden Rahmenteilen (11, 12; 31, 32; 45), mit wenigstens einem Verbindungselement, das in Bezug auf eine Mittelebene symmetrisch in der Art - im Querschnitt gesehen - schwalbenschwanzförmiger Doppelkeile (13, 42) ausgebildet ist und unter Überbrückung der Kontaktebene zwischen den Rahmenteilen (11, 12; 31, 32; 45) in zu den Kontaktflächen offene und den untereinander gleichen Querschnitten der sich beidseitig einer Mittelachse erstreckenden Abschnitte des Verbindungselements angepaßte Nuten (19, 20, 39, 40, 48, 49) eingreift, die sich längs der Kontaktflächen von gleichen Seitenkanten der Rahmenteile (11, 12; 31, 32; 45) aus in letztere jeweils symmetrisch zu einer Symmetrieebene und rechtwinklig zu den Kontaktflächen der Rahmenteile hineinerstrecken, dadurch gekennzeichnet, daß die Nuten in der Art von Sacklöchern im Abstand von den jeweils anderen Rahmenteil-Seitenkanten enden.

## Claims

1. Butt or corner joint of frame parts (11, 12; 31, 32; 45) jointed together in contact surfaces and especially consisting of solid wood, with at least one connecting element which with respect to a centre plane is symmetrically constructed in the form of - seen in cross-section-dovetail-shaped double wedges (13, 42) and engages in grooves (19, 20, 39, 40, 48, 49) while bridging over the contact plane between the contact parts (11, 12; 31, 32; 45), which grooves are open towards the contact surfaces, are matched to the mutually identical cross-sections of those portions of the connecting element that extend at both sides of a centre plane, and which extend longitudinally of the contact surfaces from like side edges of the frame parts (11, 12; 31, 32; 45) out into the latter each time symmetrically to a plane of symmetry and at right angles to the contact surfaces of the frame parts, characterised thereby that the grooves end in the manner of blind holes at a spacing from the respective other frame part side edges.

## Revendications

1. Liaison bout à bout ou en angle de deux parties de cadre (11, 12; 31, 32; 45), en particulier en bois massif, à l'aide d'au moins un élément de liaison qui au voisinage d'un plan médian est symétrique (lorsqu'il est vu de côté) et présente une double clé (13, 42) en queue d'aronde et qui par la pression des surfaces de contact établit un pontage entre les deux parties de cadre (11, 12, 31, 32, 45) insérée dans des ouvertures de même section des deux côtés d'un axe médian constituent des rainures (19, 20, 39, 40, 48, 49) s'étendant le long des surfaces de contact du même côté des parties de cadre (11, 12; 31, 32; 45) symétriquement par rapport à un plan de symétrie et à angle droit par rapport à la surface de contact des parties de cadre, caractérisée en ce que les rainures se terminent en forme de poches éloignées des bords des parties de cadre correspondant.
